# EUROPEAN PATENT SPECIFICATION

(11) **EP 3 378 625 B1**
(45) Date of publication and mention of the grant of the patent: **29.09.2021**
(21) Application number: 16816713.8
(22) Date of filing: 18.11.2016
(51) Int. Cl.: B29C 63/06, B29C 53/06

(54) **SAFETY PROTECTOR FOR PROTECTING FENCES AND MANUFACTURING METHOD**
SICHERHEITSZAUNSCHÜTZER UND DESSEN HERSTELLVERFAHREN
PROTECTION DE SÉCURITÉ DE BARRIÈRES ET PROCÉDÉ DE FABRICATION

(30) Priority: 19.11.2015 ES 201500826
(43) Date of publication of application: 26.09.2018
(73) Proprietor: Protectores Deportivos 2014, S. L., 28054 Madrid (ES)
(72) Inventor: FERNÁNDEZ DE VARGAS, José Francisco, 28054 Madrid (ES)
(74) Representative: ABG Intellectual Property Law, S.L.
(86) International application number: PCT/ES2016/070824
(87) International publication number: WO 2017/085349

(56) References cited:
- WO-A1-2015/020250
- DE-U1- 29 803 018
- NL-A- 6 800 843
- US-A- 3 557 840
- US-A- 4 838 968
- US-A1- 2009 130 389

## Description

The present invention relates to a safety protector for protecting fences, and more specifically to a protective elastic cover applied on bars, tubes or, in general, structures forming fences of specific enclosures, such as fields and/or courts for practicing sports.

### Technical Problem to be Solved

When playing some sports, it is common to have a fence separating the enclosure where the sports themselves are played from the space which is limited to the public. Said fence may represent a potential danger to athletes themselves who, for whatever reasons relating to the physical activity they perform, hit against said fence, and particularly if that hit occurs at a certain speed at which the athletes may suffer some sort of injury. The object of the invention is to dampen the hit and mitigate said injury, tending to reducing it to the minimum.

### State of the Art

Prior art of the invention proposed herein, such as that described in Spanish document ES1078674U, is known.

Document US3557840 discloses cellular plastic foam insulation board structures.

Document NL6800843A discloses an insulation lining of plastic foam.

Document US2009/130389A1 discloses a pre-applied protective jacketing to grooved insulation.

### Description of the Invention

The invention describes a manufacturing method for manufacturing a protective device for protecting fences, comprising a damping element of the device and a covering element of the device. The damper is a padded object and is manufactured with a type of material having specific flexible properties, mainly from the family of synthetic polymers, either plastic polyolefins or elastomeric materials such as polyethylene foams, polyurethane foams or foam rubbers, among others. The damper comprises a first group of notches and can also comprise at least a second group of notches, both groups of notches being V-shaped. Each of the first notches has a characteristic angle "α₁", and each of the second notches has another characteristic angle "α₂"; said notches are made on the damper itself with a cutting tool. The covering is manufactured from an impermeable plastic tarp- or fabric-type material which is placed on the damper, said covering and said damper being attached by means of an attachment element.

The manufacturing method comprises a first phase of manufacturing the damper, and a second phase of attaching the damper and the covering. In the first phase, the damper, which is a padded object, is obtained from a sheet of said material, using a cutting tool for obtaining the different types of notch. In the second phase, an attachment tool is used for assembling the damper and the covering.

In the manufacturing method, each notch of the first group of notches is made by means of a cutting tool applied on the damper itself, such that each notch of the first group is separated a distance "a" from its neighboring notch of the same group. Similarly, each notch of the second group of notches is made by means of a cutting tool applied on the damper itself, such that each notch of the second group is separated a distance "b" from its neighboring notch of the same group. Furthermore, the first notch of a first group of notches is separated a distance "c" from the closest notch of the second group of notches.

The manufacturing process must assure that the distance "a" between notches of the first group of notches ranges between 5 mm and 150 mm, the distance "b" between notches of the second group of notches ranges between 50 mm and 300 mm, and the distance "c" between the first notch of a first group of notches and the closest notch of the second group of notches ranges between 20 mm and 150 mm.

Similarly, the angle "α1" of each notch of the first group of notches must range between 5° and 90°, and the angle "α2" of each notch of the second group of notches must range between 25° and 90°.

The invention also discloses a protective device for protecting fences which is manufactured by means of the mentioned method. Said protective device for protecting fences comprises a damper and a covering which are attached to one another by means of an attachment element. For the purpose of adapting the protector to the structure of the fence, the damper comprises at least a first group of notches. The device can also comprise at least a second group of notches. Each of the notches is V-shaped, the notches of the first group of notches having a characteristic angle "α₁", and the notches of the second group of notches having a characteristic angle "α₂".

On the other hand, each notch of the first group of notches is separated a distance "a" from its neighboring notch of the same group of notches. Similarly, each notch of the second group of notches is separated a distance "b" from its neighboring notch of the same group of notches. Furthermore, the first notch of a first group of notches is separated a distance "c" from the closest notch of the second group of notches.

It has been verified that for a perfect adaptation of the protector, the distance "a" between notches corresponding to the first group of notches must range between 5 mm and 150 mm. Similarly, the distance "b" between notches corresponding to the second group of notches must range between 50 mm and 300 mm. The distance "c" between the first notch of a first group of notches and the closest notch of the second group of notches must range between 20 mm and 150 mm.

Likewise, the angle "α1" of each notch of the first group of notches must range between 5° and 90°, whereas the angle "α2" of each notch of the second group of notches must range between 25° and 90°.

### Description of the Drawings

Several drawings are provided to better understand the invention.
Figure 1 illustrates a fenced enclosure on which the protective device object of the invention is deployed.
Figure 2 depicts a perspective view of the protective device object of the invention, as well as the element that it must cover.
Figure 3 is a detailed view of the protective device, which is closed, in which the protective covering of the damping material is distinguished.
Figure 4 is another detailed view of the protective device, which is deployed, with particular detail of the damping material and the notches which comprises.
Figure 5 is a depiction of the process of manufacturing the damping material.
Figure 6 is a depiction of the process of manufacturing the safety protector, in which the damping material and the protective covering are attached forming the protector.
Figure 7 is an embodiment of the protective device for protecting fences used herein for protecting a tube 50 mm in diameter. This figure shows the dimensions of said protective device for protecting fences.

The following list shows the different elements mentioned throughout the present document:
1 - Fenced enclosure
2 - Fence
3 - Structure of the fence
4 - Protector
5 - Covering of the protector
6 - Damper of the protector
7 - First group of notches of the damper
8 - Second group of notches of the damper
9 - Attachment element between the covering and the damper
10 - Sheet of material for making the damper
11 - Cutting tool for cutting the notches
12 - Attachment tool for attaching the covering and the damper.
   "a" - Distance between contiguous notches of the first group (7)
   "b" - Distance between contiguous notches of the second group (8)
   "c" - Distance between the first notch of a first group (7) of notches and the closest notch of the second group (8) of notches
   α₁ - Opening angle of the notches of the first group (7)
   α₂ - Opening angle of the notches of the second group (8)

### Description of an Embodiment of the Invention

As indicated above, the purpose of the invention is to mitigate possible hits that may occur in specific sports when athletes hit against a fence separating the sports enclosure where the sports itself is played from stands which are limited to the public. Nevertheless, those skilled in the art will see that the application of the invention is not limited only to the field of protecting sports grounds, but rather can be extended in general to any fenced enclosure or to any structure into which a person is at risk of hitting.

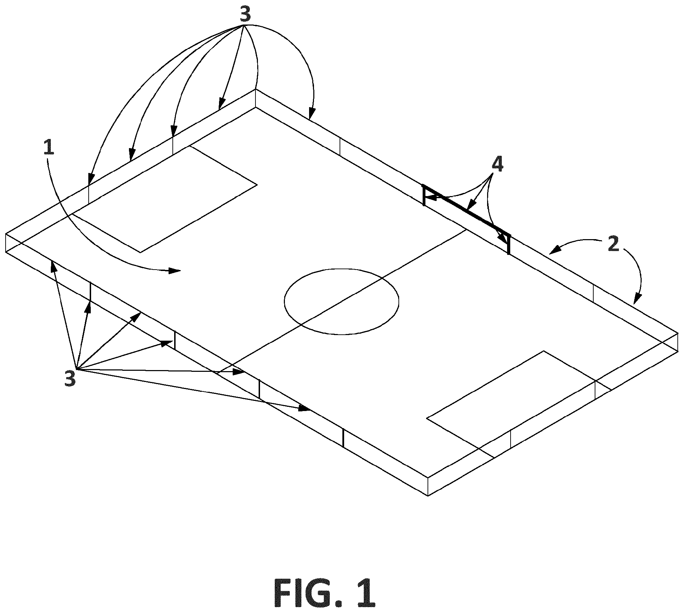

Figure 1 shows a fenced enclosure (1) on the perimeter of which there is a fence (2) which is covered with the protector (4) object of the invention. The enclosure (1) can be for sports, such as a football field, a basketball court, or one for any other sport activity; likewise, the enclosure (1) can be intended for any other type of activities that may involve hitting against the fence (2). For the purpose of damping the possible hit and mitigating said injury, the protector (4) is installed on the fence (2), particularly on the structure (3) of the fence (2).

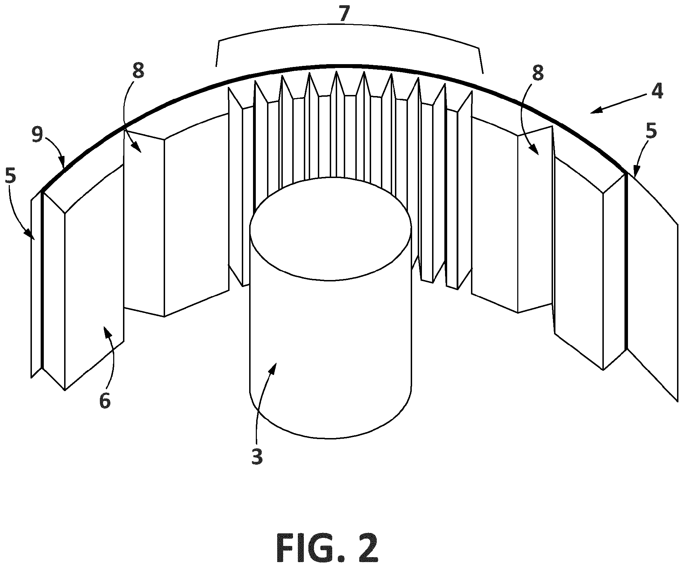

Figure 2 shows how the protector (4) covers part of the structure (3) which is part of the fence (2) of the enclosure (1). The protector (4) has an outer covering (5) which can be seen from the enclosure (1) or from the corresponding stands (not depicted in the drawings); furthermore, the protector (4) has a damper (6) neutralizing or at least mitigating possible blows that the fence (2) may receive. As mentioned below, the covering (5) is attached to the damper (6) by an attachment element (9); changing the covering (5) and installing another one will be relatively easy depending on the type of attachment element used. This function can be particularly interesting if the covering deteriorates or if the covering is to be changed for advertising purposes (as indicated below, but outside the technical subject-matter of the invention).

Each element of the structure (3) or, in general, the element on which the protector (4) is placed, can have very different dimensions and shapes, the most common ones being a circular section, rectangular section or square section, although there can be other types of sections. In order to be able to couple the protector (4) to the different types of sections of the different parts of the structure (3), a method for making at least a first group of notches (7) on the damper (6) of the protector (4) has been developed. Said protector (4) can also comprise a second group of notches (8) on the damper (6) of the protector (4). The exact shapes of the groups of notches (7), (8) will depend on the geometry of the structure (3) that must be covered by the protector (4).

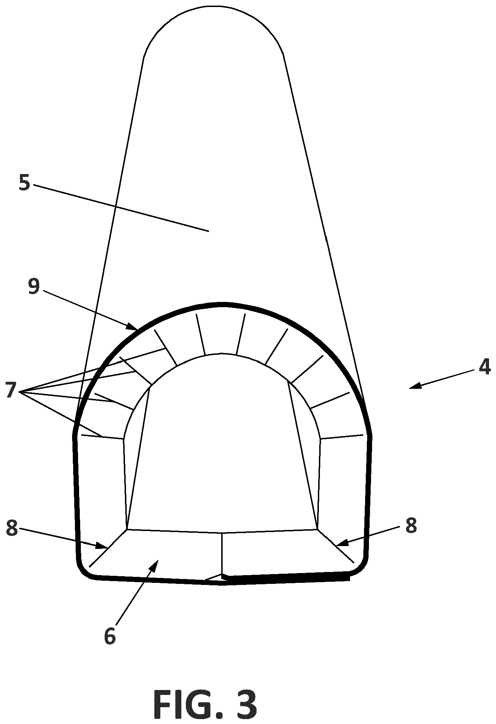

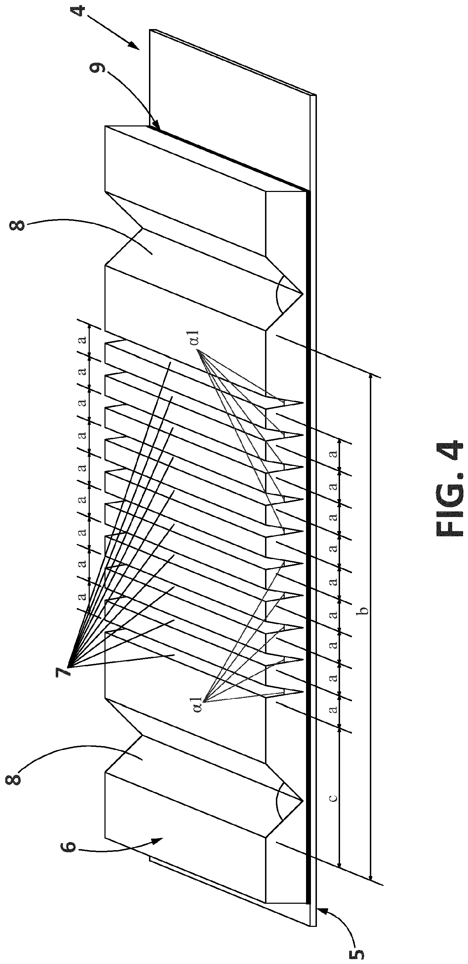

Experience has shown that to properly cover the structure (3), the protector (4) must have specific physical characteristics, and particularly, both the first group of notches (7) and the second group of notches (8) must have specific geometries. Other details are more thoroughly provided in view of Figures 3 and 4.

Figure 3 shows a view of the protector (4) in a closed configuration. The covering (5) of the protector (4) which is attached to the damper (6) by means of an attachment element (9) can be seen in this drawing. The process of attaching the covering (5) and the damper (6) can be performed by means of any of the processes known in the state of the art, such as by means of a chemical adhesive, attachment by heat-welding (depending on the compatibility of the products in which the covering (5) and the damper (6) are made), or other commercially known attachment means, such as the case of a Velcro® type attachment. This last case can be particularly useful when the covering (5) furthermore has an advertising content, and said content is to be changed depending on the trade agreements which have been made and are outside the scope of the present invention. The damper (6) is a padded object and a type of material having specific flexible properties, mainly from the family of synthetic polymers, either plastic polyolefins or elastomeric materials such as polyethylene foams, polyurethane foams or foam rubbers, among others. In order to protect it from atmospheric agents, the damper (6) must be covered with the covering (5) which is made of an impermeable plastic tarp- or fabric-type material. As mentioned, the damper (6) is attached to the covering (5) by means of an attachment element (9) according to ways known in the state of the art, some of which have already been indicated.

Manufacturing the damper (6) with a material having specific flexible properties, mainly from the family of synthetic polymers, is an essential feature of the invention and not a simple business choice. As is known, these compounds have, among others, the following characteristics: high vibration damping capacity, excellent chemical stability, high corrosion resistance, minimum water absorption, good wear resistance, excellent electric insulation capacity and low density (compared with other materials) . So it is necessary for the damper (6) to be manufactured with the indicated materials.

Figure 4 shows a perspective view of the protector (4) which is deployed, in which the covering (5) of the protector (4) which is attached to the damper (6) by means of the attachment element (9) can also be seen. Likewise, it shows both the first group of notches (7) and the second group of notches (8) which must have specific geometries depending on the shape of the section of the structure (3) that must be covered by the protector (4). In any case, experience has shown that the different notches of first group of notches (7) must be separated from one another a distance "a", whereas the notches of the second group of notches (8) must be separated from one another a distance "b". The distance "c" between the first notch of a first group of notches (7) and the closest notch of the second group of notches (8) must also be considered. Depending on the different geometric configurations possible, it has been verified that the ideal values of "a" range between 5 mm and 150 mm, the ideal values of "b" range between 50 mm and 300 mm, whereas the ideal values of "c" range between 20 mm and 150 mm. The number of notches of each group (7), (8) also depends on the geometric conditions of each case.

Similarly, experience has allowed verifying that the most suitable shape both for the first group of notches (7) and for the second group of notches (8) is V-shaped. A characteristic parameter of the notches (7), (8) is their opening angle. For the first group of notches (7), said angle is indicated as "α₁", whereas for the second group of notches (8) said angle is indicated as "α₂", as can be seen in Figures 2 and 4. Depending on the different geometric configurations possible, it has been verified that the ideal values of "α₁" range between 5° and 90°, whereas the ideal values of "α₂" range between 25° and 90°.

It has been verified that for a suitable embodiment of the invention, at least one of the side edges of the protector (4) must have a sheet of the covering (5) of the protector projecting on one of the sides thereof to allow it to overlap another immediately contiguous strip of another protector (4) (not depicted in the drawings). This prevents the existence of free areas between protectors (4), said adjacent protectors partially overlapping one another and thereby preventing spectators (or third parties) from being able to insert their fingers or other tools in the attachment area of two contiguous protectors (4). Deterioration of the protector (4) is therefore prevented while at the same time preserving the possibility of accessing the elements of the structure (3) of the fence (2). The protectors (4) have excess tarp forming the covering (5) in one of the parts thereof to carry out the functionality mentioned above and to be able to be wrapped around, and thereby prevent free areas. Furthermore, at the time of assembling a protector (4) on a horizontal element of the structure (3), a cut must be made in the intersection with the corresponding area in which it converges with a vertical element of the structure (3) in order to assure a proper attachment between horizontal and vertical protectors (4).

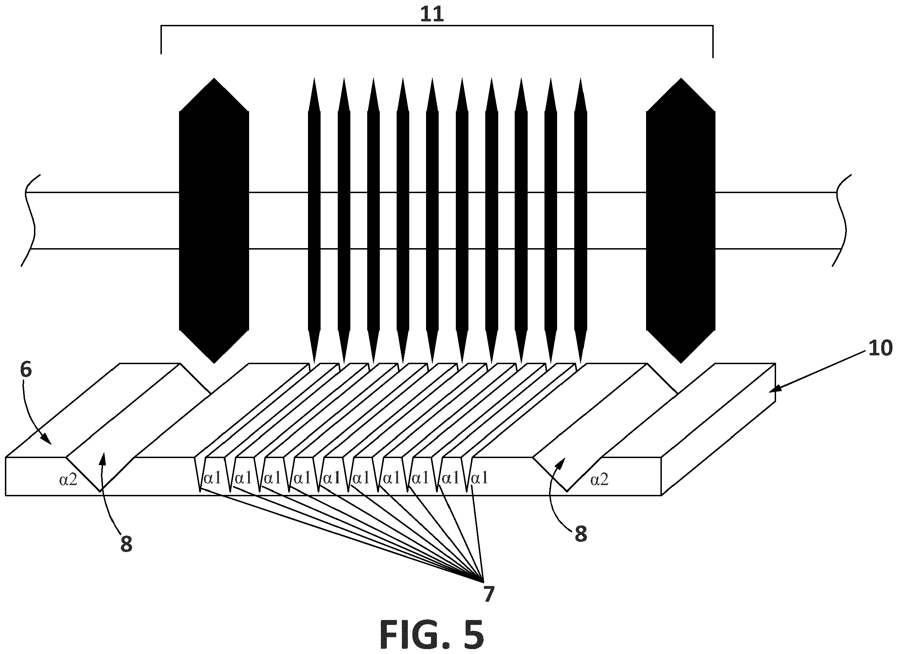

Figure 5 illustrates the way to manufacture the damper (6). A cutting tool (11) is passed over a sheet of material (10), i.e., the material forming the damper (6). Depending on the type of material of the sheet (10), the cutting tool (11) may be a mechanical-, chemical- or optical-type (for example, laser) cutting tool, among others, as known in the state of the art. The notches of the first group of notches (7) are generated with the cutting tool depending on their respective "a" and "α₁" parameters; the notches of the second group of notches (8) are also generated depending on their respective "b", "c" and "α₂" parameters. The cutting tool (11) may be guided according to a numerical control tool or manually, depending on the technique used (not illustrated in the drawings).

Alternatively, the manufacturing method for manufacturing the damper (6) is by extrusion or molding, by additive manufacturing (3D printers) or injection or thermal forming.

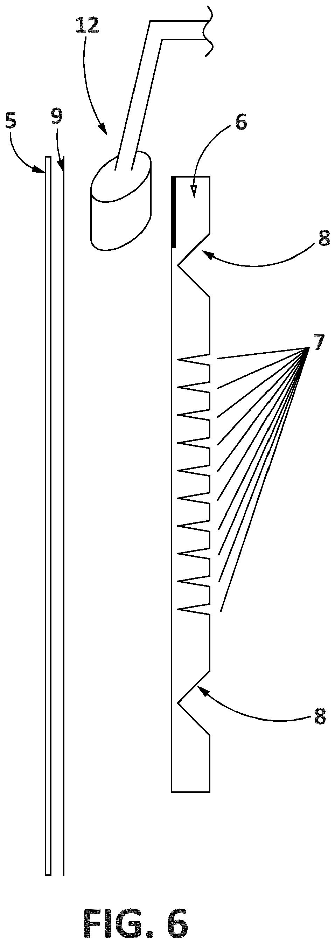

Figure 6 shows the attachment of the damper (6), which is already formed according to the step mentioned above, to the covering (5) using an attachment tool (12). The damper (6) is attached to the covering (5) by means of the attachment element (9) described above.

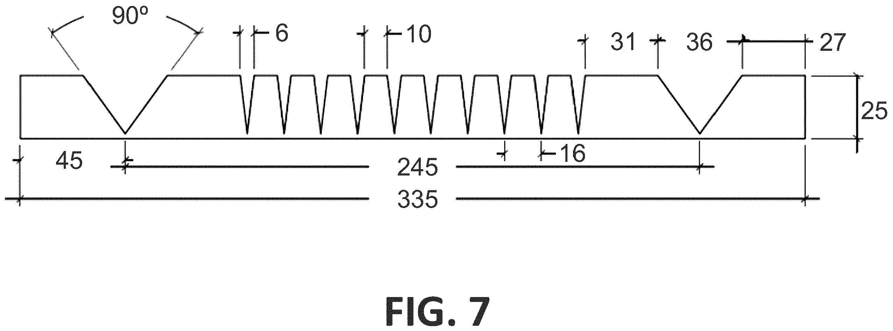

Figure 7 shows a preferred embodiment of the protective device (4) for protecting fences (2) for a tube 50 mm in diameter. In this example, the protective device (4) for protecting fences (2) has the following measurements:
- The thickness of the damping element (6) is 25 mm.
- "a" is 16 mm.
- "b" is 245 mm.
- "c" is 67 mm.
- α₁" is 19°.
- "α₂" is 90°.
- The number of notches of the first group (7) of notches is 10.
- The number of notches of the second group (8) of notches is 2.
- Each projection formed in the damping element (6) located between the notches of the first group (7) has a length of 10 mm.
- Each projection formed in the damping element (6) located between the notches of the second group (8) has a length of 31 mm.
- Each projection formed in the damping element (6) located between the notches of the first group (7) has a thickness of 23 mm.

Advantageously, the distribution of the distances and of the notches allows the protective device (4) to have at least one flat side when it is covering the fence (2), as shown in Figure 3.

Additionally, this embodiment also has the advantage of reducing the size of the device without crevices or gaps. These gaps or crevices reduce the damping effect against a possible blow due to hitting against the protected element; this embodiment therefore increases the damping effect of the protective device (4) for protecting fences (2). On the other hand, this example allows a damping element (6) of the device or the sheet (10) to be a plate which increases the efficiency of the manufacturing method for manufacturing a protective device (4) for protecting fences (2) as it makes it easier to attach the covering and to transport and store the resulting product.

The lower flat side shown in Figure 3 allows a backlashfree coupling between a protective device located in a vertical structure (3) of the fence (2) and a protective device (4) located in a horizontal structure (3) of the fence (2). The protective devices intended for being located in a vertical structure (3) of the fence (2) can adopt the configuration of the protective device (4) of the invention, but they preferably adopt a cylindrical configuration without development, i.e., without the presence of notches, which prevents stresses in the product once assembled and allows saving time during manufacture and assembly.

Therefore, when a protective device having those features, i.e., a cylindrical configuration, is located in a vertical structure (3) of the fence (2), the area of contact of said protective device with the protective device (4) located in a horizontal structure (3) of the fence (2) is similar to the axial section depicted in Figure 3. In this case, the flat part of the protective device (4) located in the horizontal structure (3) of the fence (2) is backlashfree coupled to the cylindrical protective device located in the vertical structure (3) of the fence (2). Advantageously, the flat side of the protective device (4) prevents possible manipulation by a third party, which would indeed occur if the protective element had a cylindrical shape.

In other embodiments, there is a first group of notches (7) in the damping element (6) of the protective device (4) used in the vertical structure (3) of the fence (2). Advantageously, this allows the axial section of the protective device (4) to have a circular shape when said device (4) is located in the vertical structure (3) of the fence (2), and the shape of the protective device (4) to be cylindrical when said device (4) is located in the vertical structure (3) of the fence (2).

As shown in Figures 2 and 3, for the protective device (4) to cover the fence (2), the covering (5) comprises a sheet with a length greater than the total length of the protective element (6), as shown at the right end of Figure 2. In one embodiment, the length of the sheet is 40 mm. Therefore, when the protective device (4) covers the fence (2), said sheet overlaps part of the covering (5) shown at the left end of Figure 2 and is fixed thereto.

In one embodiment, the length of the at least one of the side edges of the protector (4) projecting on one of the sides thereof to allow it to overlap another immediately contiguous strip of another protector (4) is 50 mm.

The bottom part of Figure 3 shows how the sheet of the covering (5) shown at the right end of Figure 2 is fixed with part of the covering (5) shown at the left end of Figure 2. This fixing can be carried out by means of a chemical adhesive, attachment by heat-welding, or other commercially known attachment means, such as the case of a Velcro®-type attachment.

In another embodiment, the sheet (10) is a thin plate comprising a thickness ranging between 20 and 50 mm, preferably between 20 and 30 mm.

In another embodiment, the cutting tool is an abrasive wire cutting machine.

In another embodiment, the first phase of manufacturing the damper (6) is performed by extruding the damping element (6) of the device.

Those skilled in the art will understand the scope of the invention and the advantages derived therefrom.

## Claims

1. A protective device (4) for protecting fences (2) comprising horizontal and/or vertical elements of structure (3), the protective device (4) comprising:
a) a damper (6) of the device,
b) a covering (5) of the device, wherein
- the damper (6) is a padded object, comprising a first group of V-shaped notches (7), each of the notches (7) having an angle "α1" defining the V-shaped form thereof, and
at least a second group of V-shaped notches (8), each of the second notches (8) having an angle "α2" defining the V-shaped form thereof,
wherein,
the angle "α2" of the second group (8) of notches is different from the angle "α1" of the first group (7) of notches,
each notch of the first group of notches (7) is separated a distance "a" from its neighboring notch of the first group of notches (7),
each notch of the second group of notches (8) is separated a distance "b" from its neighboring notch of the second group of notches (8), and
the first notch of a first group (7) is separated a distance "c" from the closest notch of the nearest second group of notches (8),
for the purpose of adapting the protective device (4) to the horizontal and/or vertical elements of the structure (3) of the fence (2);
- the covering (5) is a band of impermeable material which is placed on the damper (6), said covering (5) of the protector (4) having a sheet projecting on one of the sides thereof, for the purpose of allowing it to overlap another immediately contiguous strip of another adjacent protector;
- the covering (5) and the damper (6) are attached by means of an attachment element (9).

2. The protective device (4) for protecting fences according to claim 1, **characterized in that** the distance "a" ranges between 5 mm and 150 mm.

3. The protective device (4) for protecting fences according to claim 1, **characterized in that** the distance "b" ranges between 50 mm and 300 mm, and the distance "c" ranges between 20 and 150 mm.

4. The protective device (4) for protecting fences according to any of claims 1 to 3, **characterized in that** the angle "α1" of the first group (7) of notches ranges between 5° and 90°.

5. The protective device (4) for protecting fences according to any of claims 1 to 4, **characterized in that** the angle "α2" of the second group (8) of notches ranges between 25° and 90°.

6. A manufacturing method for manufacturing a protective device (4) according to any of the previous claims, wherein the method comprises the following phases:
- a first phase of manufacturing the damper (6) from a sheet (10) of material, which comprises
• making a first group of notches (7) on the sheet (10) of material from which the damper (6) itself is formed with a cutting tool (11), each of said notches being V-shaped, each of the first notches (7) having an angle "α1" defining the V-shaped form thereof between said first notches (7), and such that each notch of the first group (7) is separated a distance "a" from its neighboring notch of the same group (7);
• making a second group of V-shaped notches (8) on the damper (6) itself with said cutting tool (11), each of the second notches (8) having an angle "α2" defining the V-shaped form thereof between said second notches (8), the angle "α2" of the second group (8) of notches being different from the angle "α1" of the first group (7) of notches, such that each notch of the second group (8) is separated a distance "b" from its neighboring notch of the same group (8), and wherein the first notch of the first group (7) is separated a distance "c" from the closest notch of the second group of notches (8),
- a second phase of attaching the damper (6) to the covering (5), where the covering (5) is made with an impermeable material, which comprises placing the covering (5) on the damper (6), and attaching said covering (5) to said damper (6) by means of an attachment element (9), using an attachment tool (12) for this phase.

7. The manufacturing method according to claim 6, **characterized in that**:
the distance "a" between notches of the first group of notches (7) ranges between 5 mm and 150 mm;
the distance "b" between notches of the second group of notches (8) ranges between 50 mm and 300 mm; and
the distance "c" ranges between 20 and 150 mm.

8. The manufacturing method according to any of claims 6 to 7, **characterized in that** the angle "α1" of each notch of the first group of notches (7) ranges between 5° and 90°, and the angle "α2" of each notch of the second group of notches (8) ranges between 25° and 90°.

9. The manufacturing method according to any of claims 6 to 8, **characterized in that** the damping element (6) is made of a material from the family of synthetic polymers of the plastic polyolefin type or of the polyethylene foam-, polyurethane foam- or foam rubber-type elastomeric materials.

## Patentansprüche

1. Schutzvorrichtung (4) zum Schutz von Zäunen (2) mit horizontalen und/oder vertikalen Strukturelementen (3), wobei die Schutzvorrichtung (4) umfasst
a) einen Dämpfer (6) der Vorrichtung,
b) eine Abdeckung (5) der Vorrichtung,
**dadurch gekennzeichnet, dass**:
- der Dämpfer (6) ein gepolsterter Gegenstand ist, der Folgendes umfasst
eine erste Gruppe von V-förmigen Kerben (7), wobei jede der Kerben (7) einen Winkel "α1" aufweist, der ihre V-Form definiert, und
mindestens eine zweite Gruppe von V-förmigen Kerben (8), wobei jede der zweiten Kerben (8) einen Winkel "α2" aufweist, der ihre V-Form definiert,
wobei,
der Winkel "α2" der zweiten Gruppe (8) von Kerben von dem Winkel "α1" der ersten Gruppe (7) von Kerben verschieden ist,
jede Kerbe der ersten Gruppe von Kerben (7) um einen Abstand "a" von ihrer benachbarten Kerbe der ersten Gruppe von Kerben (7) entfernt ist,
jede Kerbe der zweiten Gruppe von Kerben (8) ist um einen Abstand "b" von ihrer benachbarten Kerbe der zweiten Gruppe von Kerben (8) entfernt, und
die erste Kerbe einer ersten Gruppe (7) um einen Abstand "c" von der nächstgelegenen Kerbe der nächstgelegenen zweiten Gruppe von Kerben (8) entfernt ist,
zum Zweck der Anpassung der Schutzvorrichtung (4) an die horizontalen und/oder vertikalen Elemente der Struktur (3) des Zauns (2);
- die Abdeckung (5) ein Band aus undurchlässigem Material ist, das auf dem Dämpfer (6) angeordnet ist, wobei die Abdeckung (5) der Schutzvorrichtung (4) ein an einer ihrer Seiten vorstehendes Blatt aufweist, um ihr zu ermöglichen, ein anderes, unmittelbar angrenzendes Band einer anderen benachbarten Schutzvorrichtung zu überlappen;
- die Abdeckung (5) und der Dämpfer (6) mit Hilfe eines Befestigungselements (9) verbunden sind.

2. Schutzvorrichtung (4) zum Schutz von Zäunen nach Anspruch 1, **dadurch gekennzeichnet, dass** der Abstand "a" zwischen 5 mm und 150 mm liegt.

3. Schutzvorrichtung (4) zum Schutz von Zäunen nach Anspruch 1, **dadurch gekennzeichnet, dass** der Abstand "b" zwischen 50 mm und 300 mm liegt und der Abstand "c" zwischen 20 und 150 mm liegt.

4. Schutzvorrichtung (4) zum Schutz von Zäunen nach einem der Ansprüche 1 bis 3, **dadurch gekennzeichnet, dass** der Winkel "α1" der ersten Gruppe (7) von Kerben zwischen 5° und 90° liegt.

5. Schutzvorrichtung (4) zum Schutz von Zäunen nach einem der Ansprüche 1 bis 4, **dadurch gekennzeichnet, dass** der Winkel "α2" der zweiten Gruppe (8) von Kerben zwischen 25° und 90° liegt.

6. Verfahren zur Herstellung einer Schutzvorrichtung (4) nach einem der vorhergehenden Ansprüche, **dadurch gekennzeichnet, dass** das Verfahren die folgenden Phasen umfasst:
- eine erste Phase der Herstellung des Dämpfers (6) aus einer Materialplatte (10), die Folgendes umfasst
• Herstellen einer ersten Gruppe von Kerben (7) auf der Materialplatte (10), aus der der Dämpfer (6) selbst gebildet wird, mit einem Schneidwerkzeug (11), wobei jede der Kerben V-förmig ist, wobei jede der ersten Kerben (7) einen Winkel "α1" aufweist, der ihre V-Form zwischen den ersten Kerben (7) definiert, und zwar so, dass jede Kerbe der ersten Gruppe (7) um einen Abstand "a" von ihrer benachbarten Kerbe derselben Gruppe (7) entfernt ist;
• Herstellen einer zweiten Gruppe von V-förmigen Kerben (8) auf dem Dämpfer (6) selbst mit dem Schneidwerkzeug (11), wobei jede der zweiten Kerben (8) einen Winkel "α2" aufweist, der die V-Form zwischen den zweiten Kerben (8) definiert, wobei der Winkel "α2" der zweiten Gruppe (8) von Kerben sich von dem Winkel "α1" der ersten Gruppe (7) von Kerben unterscheidet, so dass jede Kerbe der zweiten Gruppe (8) um einen Abstand "b" von ihrer benachbarten Kerbe derselben Gruppe (8) entfernt ist, und wobei die erste Kerbe der ersten Gruppe (7) um einen Abstand "c" von der nächstgelegenen Kerbe der zweiten Gruppe von Kerben (8) entfernt ist,
- eine zweite Phase der Befestigung des Dämpfers (6) an der Abdeckung (5), wobei die Abdeckung (5) aus einem undurchlässigen Material besteht, die das Anbringen der Abdeckung (5) auf dem Dämpfer (6) und das Befestigen der Abdeckung (5) an dem Dämpfer (6) mittels eines Befestigungselements (9) unter Verwendung eines Befestigungswerkzeugs (12) für diese Phase umfasst.

7. Herstellungsverfahren nach Anspruch 6, **dadurch gekennzeichnet, dass**:
der Abstand "a" zwischen den Kerben der ersten Gruppe von Kerben (7) zwischen 5 mm und 150 mm liegt;
der Abstand "b" zwischen den Kerben der zweiten Gruppe von Kerben (8) zwischen 50 mm und 300 mm liegt; und
der Abstand "c" zwischen 20 und 150 mm liegt.

8. Herstellungsverfahren nach einem der Ansprüche 6 bis 7, **dadurch gekennzeichnet, dass** der Winkel "α1" jeder Kerbe der ersten Gruppe von Kerben (7) zwischen 5° und 90° liegt, und der Winkel "α2" jeder Kerbe der zweiten Gruppe von Kerben (8) zwischen 25° und 90° liegt.

9. Herstellungsverfahren nach einem der Ansprüche 6 bis 8, **dadurch gekennzeichnet, dass** das Dämpfungselement (6) aus einem Material aus der Familie der synthetischen Polymere vom Typ Kunststoff-Polyolefin oder aus elastomeren Materialien vom Typ Polyethylenschaum, Polyurethanschaum oder Schaumgummi hergestellt ist.

## Revendications

1. Un dispositif de protection (4) pour la protection de barrières (2) comprenant des éléments de structure (3) horizontaux et/ou verticaux, le dispositif de protection (4) comprenant :
a) un amortisseur (6) du dispositif,
b) un revêtement (5) du dispositif,
dans lequel
- l'amortisseur (6) est un objet capitonné, comprenant
un premier groupe d'encoches (7) en forme de V, chacune des encoches (7) ayant un angle "α1" définissant sa forme en V, et
au moins un deuxième groupe d'encoches en forme de V (8), chacune des deuxièmes encoches (8) ayant un angle "α2" définissant sa forme en V,
l'angle "α2" du deuxième groupe (8) d'encoches étant différent de l'angle "α1" du premier groupe (7) d'encoches,
chaque encoche du premier groupe d'encoches (7) est séparée d'une distance "a" de son encoche voisine du premier groupe d'encoches (7),
chaque encoche du deuxième groupe d'encoches (8) est séparée d'une distance "b" de son encoche voisine du deuxième groupe d'encoches (8), et
la première encoche d'un premier groupe (7) est séparée d'une distance "c" de l'encoche la plus proche du deuxième groupe d'encoches (8) le plus proche,
dans le but d'adapter le dispositif de protection (4) aux éléments horizontaux et/ou verticaux de la structure (3) de la barrière (2) ;
- le revêtement (5) est une bande de matériau imperméable qui est posée sur l'amortisseur (6), ledit revêtement (5) du protecteur (4) comportant une feuille faisant saillie sur l'un de ses côtés, dans le but de lui permettre chevaucher une autre bande immédiatement contiguë d'un autre protecteur adjacent ;
- le revêtement (5) et l'amortisseur (6) sont fixés au moyen d'un élément de fixation (9).

2. Le dispositif de protection (4) pour la protection de barrières selon la revendication 1, **caractérisé en ce que** la distance "a" est comprise entre 5 mm et 150 mm.

3. Le dispositif de protection (4) pour la protection de barrières selon la revendication 1, **caractérisé en ce que** la distance "b" est comprise entre 50 mm et 300 mm, et la distance "c" est comprise entre 20 et 150 mm.

4. Le dispositif de protection (4) pour la protection de barrières selon l'une quelconque des revendications 1 à 3, **caractérisé en ce que** l'angle "α1" du premier groupe (7) d'encoches est compris entre 5° et 90°.

5. Le dispositif de protection (4) pour la protection de barrières selon l'une quelconque des revendications 1 à 4, **caractérisé en ce que** l'angle "α2" du deuxième groupe (8) d'encoches est compris entre 25° et 90°.

6. Un procédé de fabrication d'un dispositif de protection (4) selon l'une quelconque des revendications précédentes, le procédé comprenant les phases suivantes :
- une première phase de fabrication de l'amortisseur (6) à partir d'une feuille (10) de matériau, qui comprend
• le fait de réaliser, avec un outil de coupe (11), un premier groupe d'encoches (7) sur la feuille (10) de matériau dont est constitué l'amortisseur (6) lui-même, chacune desdites encoches étant en forme de V, chacune des premières encoches (7) ayant un angle "α1" définissant sa forme en V entre lesdites premières encoches (7), et de telle façon que chaque encoche du premier groupe (7) est séparée d'une distance "a" de son encoche voisine du même groupe (7) ;
• le fait de réaliser un deuxième groupe d'encoches en forme de V (8) sur l'amortisseur (6) lui-même avec ledit outil de coupe (11), chacune des deuxièmes encoches (8) ayant un angle "α2" définissant sa forme en V entre lesdites deuxièmes encoches (8), l'angle "α2" du deuxième groupe (8) d'encoches étant différent de l'angle "α1" du premier groupe (7) d'encoches, de sorte que chaque encoche du deuxième groupe (8) est séparée d'une distance "b" de son encoche voisine du même groupe (8), et la première encoche du premier groupe (7) est séparée d'une distance "c" de l'encoche la plus proche du deuxième groupe d'encoches (8),
- une deuxième phase de fixation de l'amortisseur (6) sur le revêtement (5), le revêtement (5) étant réalisé avec un matériau imperméable, qui comprend le fait de placer le revêtement (5) sur l'amortisseur (6), et le fait de fixer ledit revêtement (5) audit amortisseur (6) au moyen d'un élément de fixation (9), en utilisant un outil de fixation (12) pour cette phase.

7. Le procédé de fabrication selon la revendication 6, **caractérisé en ce que** :
la distance "a" entre des encoches du premier groupe d'encoches (7) est comprise entre 5 mm et 150 mm ;
la distance "b" entre des encoches du deuxième groupe d'encoches (8) est comprise entre 50 mm et 300 mm ; et
la distance "c" est comprise entre 20 et 150 mm.

8. Le procédé de fabrication selon l'une quelconque des revendications 6 à 7, **caractérisé en ce que** l'angle "α1" de chaque encoche du premier groupe d'encoches (7) est compris entre 5° et 90°, et l'angle "α2" de chaque encoche du deuxième groupe d'encoches (8) est compris entre 25° et 90°.

9. Le procédé de fabrication selon l'une quelconque des revendications 6 à 8, **caractérisé en ce que** l'élément amortisseur (6) est réalisé en un matériau de la famille des polymères synthétiques du type plastique polyoléfine ou matériaux élastomères de type mousse de polyéthylène, mousse de polyuréthane ou mousse de caoutchouc.
